# EUROPEAN PATENT APPLICATION

(11) **EP 2 177 375 A1**
(43) Date of publication of application: **21.04.2010**
(21) Application number: 08778198.5
(22) Date of filing: 16.07.2008
(51) Int. Cl.: B60C 7/00, B60C 7/18

(54) **NON-PNEUMATIC TIRE, AND ITS MANUFACTURING METHOD**

(30) Priority: 31.07.2007 JP 2007199190; 31.07.2007 JP 2007199199
(71) Applicant: TOYO TIRE & RUBBER CO., LTD ., Osaka 550-8661 (JP)
(72) Inventor: IWASE, Masanori, Osaka-shi Osaka 550-8661 (JP); SEGAWA, Masahiro, Osaka-shi Osaka 550-8661 (JP)
(74) Representative: Sajda, Wolf E.
(86) International application number: PCT/JP2008/062781
(87) International publication number: WO 2009/016962

(57) **Abstract**

In a non-pneumatic tire having a support structure body supporting a load from a vehicle, the support structure body (SS) comprises an inner annular portion (1) an intermediate annular portion (2) provided concentrically in an outer side of the inner annular portion (1), an outer annular portion (3) provided concentrically in an outer side of the intermediate annular portion (2), a plurality of inner coupling portions (4) coupling the inner annular portion (1) and the intermediate annular portion (2) and being independent in a circumferential direction, and a plurality of outer coupling portions (5) coupling the outer annular portion (3) and the intermediate annular portion (2) and being independent in a circumferential direction.

## Description

### BACKGROUND OF THE INVENTION

### Field of the Invention

The present invention relates to a non-pneumatic tire provided with a support structure body supporting a load from a vehicle, serving as a tire structure member, and preferably relates to a non-pneumatic tire which can be used in place of a pneumatic tire.

### Description of the Related Art

A pneumatic tire has a function of supporting a load, a performance of absorbing shocks from a ground surface, and a performance of transmitting power (accelerating, stopping and direction changing performance), and is accordingly employed in various vehicles, particularly a bicycle, a motor cycle, an automobile and a truck.

In particular, these capabilities greatly have contributed to a development of automobiles and other motor vehicles. Further, the shock absorbing performance of a pneumatic tire is useful in a transportation cart for medical equipment and an electronic device, and for other intended uses.

As a conventional non-pneumatic tire, for example, a solid tire, a spring tire, a cushion tire and the like exist, however, they do not have the excellent performance of a pneumatic tire. For example, a solid tire and a cushion tire support the load based on a compression of a ground portion, however, this kind of tire is heavy and rigid, and does not have a shock absorbing performance like a pneumatic tire. Further, in a non-pneumatic tire, it is possible to improve the cushion performance by enhancing elasticity, however, there is a problem that such a load support performance or durability of the pneumatic tire is deteriorated.

Accordingly, in the following Patent Document 1, there is proposed a non-pneumatic tire having a reinforced annular band supporting a load applied to the tire, and a plurality of web spokes transmitting a load force with a tension force between the reinforced annular band and a wheel or a hub, for the purpose of developing a non-pneumatic tire having an operating characteristic like a pneumatic tire. Further, with regard to the web spoke, there is disclosed a point that a rubber or the like is reinforced for the purpose of enhancing an elastic modulus in tension.

Further, in the following Patent Document 2, there is proposed a non-pneumatic tire in which an inner circumferential wheel and an outer circumferential wheel are coupled by a ring plate-shaped web and a rib, and which is provided with an intermediate wheel cutting across the web and the rib.

- Patent Document 1:: Japanese National Publication of Translated Version No. 2005-500932
- Patent Document 2:: Japanese Unexamined Patent Application Publication JP-A-1-311 902

### DISCLOSURE OF THE INVENTION

### PROBLEMS TO BE SOLVED BY THE INVENTION

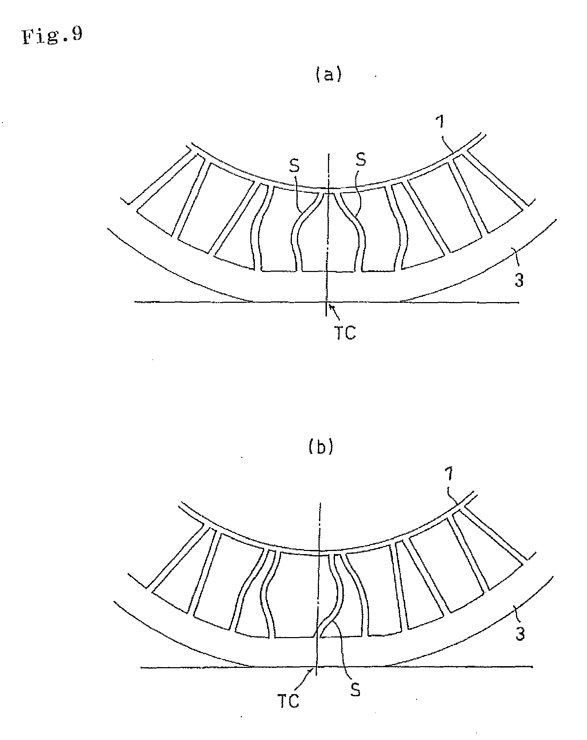

However, in the non-pneumatic tire described in the Patent Document 1, it has been known that a fluctuation of a vertical load tends to be generated due to a positional relationship between a position of the web spoke and a center position of the ground surface, in the case where the vertical load is applied so as to have an identical deflection amount. In other words, in the case where the center position between the web spokes S is positioned at the center TC of the ground surface as shown in Fig. 9(a), a reaction force from the tire becomes small (soft), and in the case where a position of a lower end of the web spoke S is positioned at the center TC of the ground surface as shown in Fig. 9(b), the reaction force from the tire becomes large (rigid), a circumferential fluctuation of the tire rigidity (which may be, hereinafter, simply referred to as rigidity fluctuation) is seen in a ground state between the both. As a result, there is a risk that uniformity is deteriorated, and various performances are deteriorated due to an uneven grounding.

In this case, in the non-pneumatic tire of the Patent Document 1, there is described a matter that a load from an axle is supported and a power is transmitted with a tensile force of the web spoke. In this case, a rigidity fluctuation can be improved in a theoretical sense by lowering a rigidity with respect to a compression force of the web spoke. However, since a large problem is generated in a durability in the case of transmitting the power from the axle only by the tensile force of the web spoke, a certain level of rigidity with respect to the compression force is necessary in the web spoke.

Further, in the non-pneumatic tire described in the Patent Document 2, since the inner circumferential wheel and the outer circumferential wheel are coupled by the ring plate-shaped web, the coupling portions are not structured such as to be independent in a circumferential direction, and it is hard to secure a deflecting amount demanded in the tire caused by a deformation of the web.

Accordingly, the object of the present invention is to provide a non-pneumatic tire which is excellent in its durability, and in which a rigidity fluctuation is hard to be generated by a positional relationship between a spoke position and a ground surface center position, and it is possible to secure a sufficient deflecting amount, as well as a manufacturing method thereof.

### MEANS FOR SOLVING THE PROBLEMS

The object mentioned above can be achieved by the present invention described as follows.
In other words, in accordance with the present invention, there is provided a non-pneumatic tire having a support structure body supporting a load from a vehicle,
wherein the support structure body comprises:
an inner annular portion;
an intermediate annular portion provided concentrically at an outer side of the inner annular portion;
an outer annular portion provided concentrically at an outer side of the intermediate annular portion;
a plurality of inner coupling portions coupling the inner annular portion and the intermediate annular portion and being independent in a circumferential direction; and
a plurality of outer coupling portions coupling the outer annular portion and the intermediate annular portion and being independent in a circumferential direction.

In accordance with the non-pneumatic tire of the present invention, since the inner annular portion and the outer annular portion are coupled by a plurality of coupling portions which are independent in the circumferential direction, the coupling portions tend to be deformed in the circumferential direction, and it is possible to sufficiently secure the deflecting amount demanded in the tire caused by the deformation of the coupling portions.

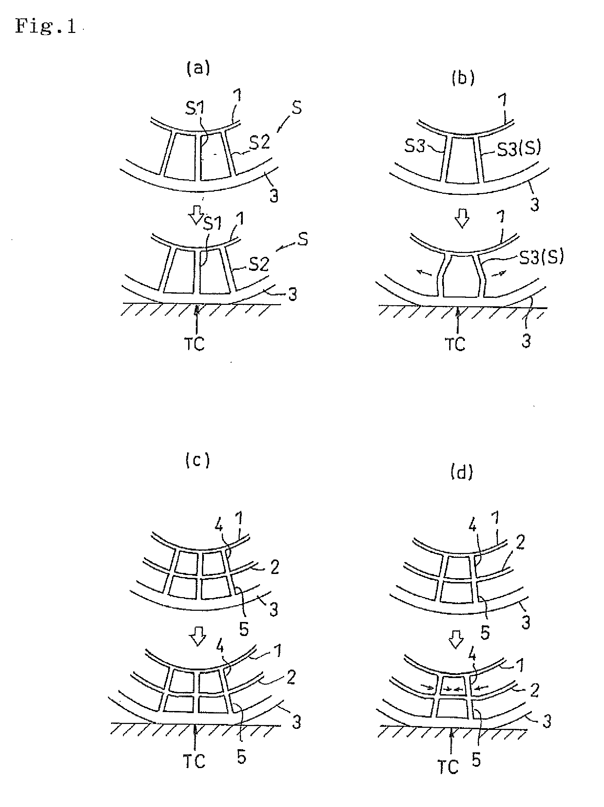

Further, since the intermediate annular portion is interposed in a plurality of coupling portions coupling the inner annular portion and the outer annular portion, it is possible to cause that a rigidity fluctuation is hard to be generated due to the positional relationship between the spoke position and the ground surface center position (refer to Figs. 1(a) to 1(d)).
In other words, in the conventional non-pneumatic tire in which the intermediate annular portion is not interposed, a bending force is hard to be generated in a web spoke S1, and a buckling of the web spoke S 1 is hard to be generated in a case where a position of a lower end of the web spoke S 1 is positioned at a ground surface center TC as shown in Fig. 1 (a) in a case where a vertical load is applied.
On the contrary, in a case where a center position of a web spoke S3 is positioned at the ground surface center TC as shown in Fig. 1(b), a bending force is generated in the web spoke S3, and a buckling (a bending deformation in a direction of an outside arrow) tends to be generated, due to a deformation of a tread surface, a displacement in a load direction or the like.
As a result, in the case where the vertical load is applied in such a manner as to come to an identical deflecting amount, a reaction force from the tire becomes large (hard) in the positional relationship shown in Fig. 1(a), in comparison with the positional relationship shown in Fig. 1(b), so that the rigidity fluctuation is generated in a state where the both are grounded.

On the other hand, in a non-pneumatic tire in which the intermediate annular portion 2 is interposed, such as in the present invention, the buckling of the outer coupling portion 5 and the inner coupling portion 4 is hard to be generated in the same manner as shown in Fig. 1(a), in the case where the position of the lower end of the outer coupling portion 5 is positioned at the ground surface center TC, as shown in Fig. 1(c) in the case where the vertical load is applied.
Further, even in a case where the center position of the outer coupling portion 5 is positioned at the ground surface center TC as shown in Fig. 1(d), the intermediate annular portion 2 applies a reinforcement with a tensile force (a tensile force in the direction of an inside inward arrow) and a reinforcement with a compression (a compression force in the direction of an outside inward arrow), to the bending force generated in the outer coupling portion 5 and the inner coupling portion 4, whereby the buckling of the outer coupling portion 5 and the inner coupling portion 4 is hard to be generated.
As a result, in the non-pneumatic tire in accordance with the present invention, the buckling is hard to be generated in the ground state of the both, and the deflecting amount and the vertical load until the buckling is generated become large (that is, a break point at which the buckling starts being generated becomes high), in comparison with the related art, so that it is possible to set a region in which the rigidity fluctuation becomes slight wide, in the positional relationship shown in Fig. 1(c), and in the positional relationship shown in Fig. 1(d).

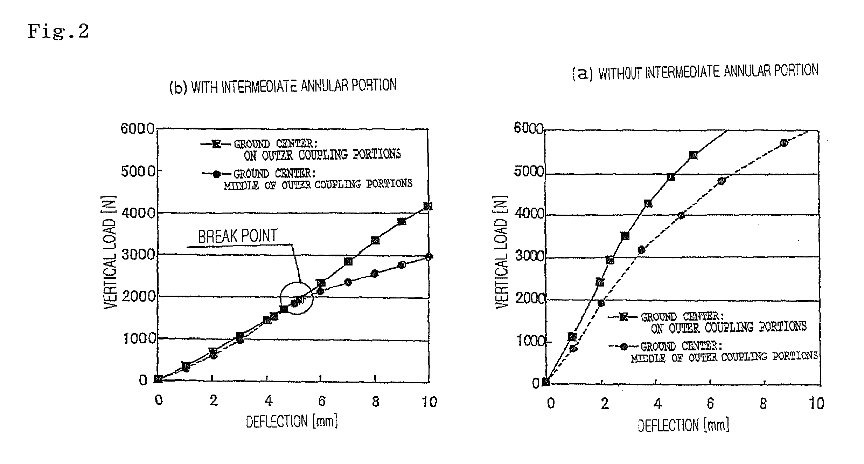

Figs. 2(a) to 2(b) show specific data of the above. With this, in the non-pneumatic tire in which the intermediate annular portion 2 is not interposed, the buckling (the state of Fig. 1(b)) of the web spoke S is generated at a small deflecting amount, as shown in Fig. 2(a), and it is impossible to set the break point high (the rigidity difference is generated from an initial stage of the load application).
On the contrary, in the non-pneumatic tire in which the intermediate annular portion 2 is interposed, such as in the present invention, since it is possible to cause that buckling is hard to be generated at the positional relationship shown in Fig. 1(d), it is possible to set the break point high. As mentioned above, since it is possible to set the region in which the rigidity fluctuation becomes slight wide, in the positional relationship shown in Fig. 1(c), and the positional relationship shown in Fig. 1(d), it is possible to provide the non-pneumatic tire in which a rigidity fluctuation is hard to be generated by the positional relationship between the spoke position and the ground surface center position.

Further, in the non-pneumatic tire in accordance with the present invention, since a stress concentration in the vicinity of a root of the web spoke is relaxed by the reinforcing effect generated by the intermediate annular portion as mentioned above, it is possible to improve the durability in comparison with the related art.

In the structure mentioned above, it is preferable that the intermediate annular portion is reinforced by reinforcing fibers. Accordingly, the reinforcing effect mentioned above generated by the intermediate annular portion is further enhanced, and it is possible to make the rigidity fluctuation caused by the positional relationship between the spoke position and the ground surface center position smaller while further improving the durability.

In the structure mentioned above, it is preferable that the support structure body is integrally formed by an elastic material. Since the support structure body is integrally formed by the elastic material, the stress concentration in the vicinity of the root of the web spoke is relaxed, whereby it is possible to improve the durability in comparison with the related art.

In the structure mentioned above, it is preferable that the support structure body is structured such that the outer annular portion, the outer coupling portion, the inner coupling portion and the inner annular portion are further reinforced by reinforcing fibers. In accordance with the reinforced structure, it is possible to achieve a weight saving while further improving the durability, and it is further possible to improve a load capability against the load.

Further, it is preferable that the reinforcing fibers are constructed by a net-like fiber assembly constituted by fibers arranged in a tire axial direction and fibers arranged in a tire circumferential direction. Since the elastic material is two-dimensionally reinforced by using the net-like fiber assembly as mentioned above, it is possible to improve a rigidity and a durability against a tire side force.

Further, it is preferable that a reinforcing layer reinforcing a bending deformation of the outer annular portion is provided in an outer side of the outer annular portion. In accordance with this structure, it is possible to set the break point to a high load region, by causing that a bending deformation of the tread surface is hard to be generated. Further, it is possible to make the ground pressure more uniform by causing that a local bending deformation of the tread surface is hard to be generated.

Further, it is preferable that a tread layer is provided in an outermost layer in an outer side of the outer annular portion. It is possible to improve a turning performance, a breaking performance, a traction performance, a shock absorbing performance and the like of the non-pneumatic tire, by setting the tread layer.

On the other hand, a manufacturing method of a non-pneumatic tire in accordance with the present invention is characterized by having a step of arranging the reinforcing fibers in a part of a space portion in a forming die, by using the forming die having the space portion corresponding to the support structure body, a step of filling a raw material liquid of an elastic material in the space portion of the forming die, and a step of solidifying the raw material liquid of the elastic material.

In accordance with the manufacturing method of the present invention, it is possible to manufacture a support structure body of the present invention in which the reinforcing fibers are arranged at a predetermined position, and which is integrally formed by the elastic material, and it is possible to provide the non-pneumatic tire which is excellent in its durability, and in which a rigidity fluctuation is hard to be generated by the positional relationship between the spoke position and the ground surface center position.

In the structure mentioned above, it is preferable to alternately pass the reinforcing fibers through the space portion corresponding to the intermediate annular portion and the space portion corresponding to the outer annular portion while going through the space portion corresponding to the outer coupling portion, at the time of arranging the reinforcing fibers in the space portion. In accordance with this manufacturing method, it is possible to arrange the reinforcing fibers seamlessly in the outer coupling portion, the intermediate annular portion and the outer annular portion by some simple steps, and it is possible to further improve the reinforcing effect and the durability.

### BRIEF DESCRIPTION OF THE DRAWINGS

- Fig. 1: is an explanatory view for explaining operation and effects of a non-pneumatic tire in accordance with the present invention;
- Fig. 2: is a graph for explaining the operation and the effects of the non-pneumatic tire in accordance with the present invention;
- Fig. 3: is a front elevational view showing an example of the non-pneumatic tire in accordance with the present invention;
- Fig. 4: is a front elevational view showing an example of a manufacturing method of the non-pneumatic tire in accordance with the present invention;
- Fig. 5: is a front elevational view showing another example of a non-pneumatic tire in accordance with the present invention;
- Fig. 6: is a graph showing a result of a rigidity fluctuation test in an Example and a Comparative Example;
- Fig. 7: is a graph showing results of the rigidity fluctuation test in the Example;
- Fig. 8: is a graph showing results of the rigidity fluctuation test in a Comparative Example 3; and
- Fig. 9: is an explanatory view for explaining a problem in a conventional non-pneumatic tire.

### DESCRIPTION OF REFERENCE NUMERALS

- 1: inner annular portion
- 2: intermediate annular portion
- 2a: reinforcing fibers
- 3: outer annular portion
- 4: inner coupling portion
- 5: outer coupling portion
- 6: reinforcing layer
- 7: tread layer
- 10: forming die
- C: space portion

### BEST MODE FOR CARRYING OUT THE INVENTION

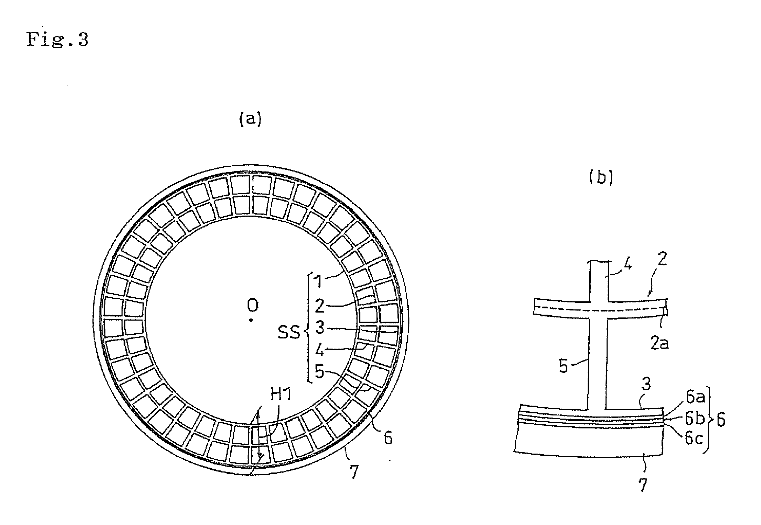

A description will be given below of an embodiment in accordance with the present invention with reference to the accompanying drawings. Figs. 3 (a) and 3(b) are front elevational views showing an example of a non-pneumatic tire in accordance with the present invention, in which Fig. 3(a) is a front elevational view showing a whole, and Fig. 3(b) is a front elevational view showing a substantial part. In this case, reference symbol O denotes a shaft center, and reference symbol H1 denotes a tire cross sectional height, respectively.

The non-pneumatic tire in accordance with the present invention is provided with a support structure body supporting a load from a vehicle. The non-pneumatic tire in accordance with the present invention may be provided with a member corresponding to a tread, a reinforcing layer, a member for adapting to an axle and a rim, and the like, in an outer side (an outer circumferential side) and an inner side (an inner circumferential side) of the support structure body, as long as it is provided with the support structure body as mentioned above.

The non-pneumatic tire in accordance with the present invention is structured, as shown in Fig. 3, such that a support structure body SS is provided with an inner annular portion 1, an intermediate annular portion 2 concentrically provided at an outer side thereof, an outer annular portion 3 concentrically provided at an outer side thereof, a plurality of inner coupling portions 4 which couple the inner annular portion 1 and the intermediate annular portion 2 and are independent in a circumferential direction, and a plurality of outer coupling portions 5 which couple the outer annular portion 3 and the intermediate annular portion 2 and are independent in a circumferential direction.

It is preferable that the inner annular portion 1 is formed as a cylindrical shape having a fixed thickness, in the light of improving its uniformity. Further, it is preferable that a concavity and convexity or the like for holding a fitting performance is provided in an inner circumferential surface of the inner annular portion 1 for installing an axle and a rim.

The thickness of the inner annular portion 1 is preferably between 2 and 7 % of a tire cross sectional height H1, and more preferably between 3 and 6 %, in the light of a weight saving and an improvement of the durability, while sufficiently transmitting forces to the inner coupling portion 4.

The inner diameter of the inner annular portion 1 is approximately decided in conjunction with dimensions or the like of the rim and the axle installing the non-pneumatic tire, however, since the present invention is provided with the intermediate annular portion 2, it is possible to make the inner diameter of the inner annular portion 1 significantly smaller than the conventional one. In this case of assuming a substitution for a general pneumatic tire, it is preferably between 250 and 500 mm, and more preferably between 330 and 440 mm.

The width in an axial direction of the inner annular portion 1 is appropriately decided in correspondence with an intended use, a length of the axle, or the like, however, in the case of assuming the substitution for a general pneumatic tire, it is preferably between 100 and 300 mm, and more preferably between 130 and 250 mm.

The tensile modulus of the inner annular portion 1 is preferably between 5 and 180 000 MPa, and more preferably between 7 and 50 000 MPa, in the light of achieving a weight saving, an improvement of a durability and an installing performance while sufficiently transmitting the forces to the inner coupling portion 4. In this case, the tensile modulus in the present invention is a value which is obtained by carrying out a tensile test in accordance with JIS K7312, and is calculated from a tensile stress at the time of 10 % elongation.

Since the support structure body SS in the present invention is integrally formed by the elastic material, the inner annular portion 1, the intermediate annular portion 2, the outer annular portion 3, the inner coupling portion 4, and the outer coupling portion 5 are basically made of the same material (have a common base material) except for the reinforcing structure.

The elastic material in the present invention indicates a material in which the tensile modulus which is obtained by carrying out a tensile test in accordance with JIS K7312 and is calculated from the tensile stress at the time of 10 % elongation is equal to or less than 100 MPa. As the elastic material of the present invention, the tensile modulus is preferably between 5 and 100 MPa, and more preferably between 7 and 50 MPa, in the light of applying a suitable rigidity while obtaining a sufficient durability. As the elastic material used as the base material, there can be listed up a thermoplastic elastomer, a cross linked rubber, and other resins.

As a thermoplastic elastomer, there can be listed up a polyester elastomer, a polyolefin elastomer, a polyamide elastomer, a polystyrene elastomer, a polyvinyl chloride elastomer, a polyurethane elastomer and the like. As a rubber material constructing the cross linked rubber material, there can be listed up synthetic rubbers such as a styrene butadiene rubber (SBR), a butadiene rubber (BR), an isoprene rubber (IIR), a nitrile rubber (NBR), a hydrogenation nitrile rubber (a hydrogenation NBR), a chloroprene rubber (CR), an ethylene propylene rubber (EPDM), a fluorine-contained rubber, a silicon rubber, an acrylic rubber, an urethane rubber and the like, in addition to a natural rubber. Two or more kinds of rubber materials may be used together as occasion demands.

As for other resins, a thermoplastic resin, or a thermosetting resin can be listed up. As a thermoplastic resin, there can be listed up a polyethylene resin, a polystyrene resin, a polyvinyl chloride resin and the like, and as the thermosetting resin, there can be listed up an epoxy resin, a phenol resin, a polyurethane resin, a silicone resin, a polyimide resin, a melamine resin and the like.

In the elastic material mentioned above, in the light of forming and working characteristics and costs, a polyurethane resin is preferably used. In this case, a foamed material may be used as the elastic material, and a material obtained by foaming a thermoplastic elastomer, a cross linked rubber or another resin can be used.

The support structure body SS integrally formed by the elastic material is structured such that at least the intermediate annular portion 2 is reinforced by reinforcing fibers 2a, and is preferably structured such that the outer annular portion 3, the outer coupling portion 5, the inner coupling portion 4 and the inner annular portion 1 are reinforced by the reinforcing fibers.

As reinforcing fibers, there can be listed up reinforcing fibers such as continuous fibers, short fibers, woven fibers, unwoven fibers or the like, however, it is preferable to use a net state fiber assembly constructed by the fibers arranged in the tire axial direction and the fibers arranged in the tire circumferential direction, as an aspect using the continuous fibers.

As a kind of the reinforcing fibers, for example, there can be listed up a polyamide cord such as a rayon cord, a nylon-6, 6 or the like, a polyester cord such as a polyethylene terephthalate or the like, an aramid cord, a glass fiber cord, carbon fibers, a steel cord and the like.

In the present invention, it is possible to employ a reinforcement by a granular filler, and a reinforcement by a metal ring or the like, in addition to the reinforcement using the reinforcing fibers. As a granular filler, there can be listed up ceramics such as carbon black, silica, alumina or the like, another inorganic filler and the like.

The shape of the intermediate annular portion 2 is not limited to the cylindrical shape, but may be set to a polygonal tubular shape and the like.

The thickness of the intermediate annular portion 2 is preferably between 3 % and 10 % of the tire cross sectional height H1, in the light of a weight saving and an improvement of a durability while sufficiently reinforcing the inner coupling portion 4 and the outer coupling portion 5, and is more preferably between 4 % and 9 %.

The inner diameter of the intermediate annular portion 2 is beyond the inner diameter of the inner annular portion 1, and becomes less than the inner diameter of the outer annular portion 3. In this case, as the inner diameter of the intermediate annular portion 2, in the light of improving the reinforcing effect of the inner coupling portion 4 and the outer coupling portion 5 as mentioned above, it is preferable to set the inner diameter obtained by adding a value which is between 20 and 80 % of a value obtained by subtracting the inner diameter of the inner annular portion 1 from the inner diameter of the outer annular portion 3, to the inner diameter of the inner annular portion 1, and it is more preferable to set the inner diameter obtained by adding a value which is between 30 % and 60 %, to the inner diameter of the inner annular portion 1.

The width in the axial direction of the intermediate annular portion 2 is appropriately decided in correspondence to an intended use or the like, however, in the case of assuming the substitution of a general pneumatic tire, it is preferably between 100 mm and 300 mm, and more preferably between 130 mm and 250 mm.

The tensile modulus of the intermediate annular portion 2 is preferably between 8 000 MPa and 180 000 MPa, and is more preferably between 10 000 MPa and 50 000 MPa, in the light of achieving an improvement of the durability and the improvement of the load capacity by sufficiently reinforcing the inner coupling portion 4 and the outer coupling portion 5.

Since it is preferable that the tensile modulus of the intermediate annular portion 2 is higher than that of the inner annular portion 1, the fiber reinforcing material obtained by reinforcing the thermoplastic elastomer, the cross linked rubber, or another resin by the fibers or the like is preferable. In other words, it is preferable that the intermediate annular portion 2 is reinforced by the reinforcing fibers 2a, as shown in Fig. 3(b). The reinforcing fibers 2a can be provided as a single layer or a plurality of layers.

The shape of the outer annular portion 3 is preferably set to a cylindrical shape having a fixed thickness, in the light of improving the uniformity. The thickness of the outer annular portion 3 is preferably between 2 and 7 % of the tire cross sectional height H1, and is more preferably between 2 and 5 %, in the light of achieving the weight saving and the improvement of the durability while sufficiently transmitting the forces from the outer coupling portion 5.

The inner diameter of the outer annular portion 3 is appropriately decided in correspondence to an intended use or the like thereof, however, in the present invention, since the intermediate annular portion 2 is provided, it is possible to make the inner diameter of the outer annular portion 3 larger than the conventional one. In this case, in the case of assuming the substitution of a general pneumatic tire, it is preferably between 420 mm and 750 mm, and more preferably between 480 mm and 680 mm.

The width in the axial direction of the outer annular portion 3 is appropriately decided in correspondence to an intended use or the like, however, in the case of assuming the substitution of a general pneumatic tire, it is preferably between 100 mm and 300 mm, and more preferably between 130 mm and 250 mm.

The tensile modulus of the outer annular portion 3 can be set to the same level as the inner annular portion 1, in a case where the reinforcing layer 6 is provided in the outer periphery of the outer annular portion 3, as shown in Fig. 3. In a case where the reinforcing layer 6 mentioned above is not provided, it is preferably between 5 MPa and 180 000 MPa and is more preferably between 7 MPa and 50 000 MPa, in the light of achieving the weight saving and the improvement of the durability while sufficiently transmitting the forces from the outer coupling portion 5.

In the case of enhancing the tensile modulus of the outer annular portion 3 without providing the reinforcing layer 6, it is preferable to employ the fiber reinforcing material obtained by reinforcing the elastic material by the fibers or the like. In other words, in the case where the reinforcing layer 6 is not provided, it is preferable that the outer annular portion 3 is reinforced by the reinforcing fibers.

The inner coupling portion 4 is structured such as to couple the inner annular portion 1 and the intermediate annular portion 2, and a plurality of inner coupling portions are provided in such a manner as to be independent in the circumferential direction, by setting a suitable interval between the both, or the like. It is preferable that the inner coupling portions 4 are provided so as to be spaced at fixed intervals in the light of improving the uniformity.
The number of the inner coupling portions 4 at the time of being provided all over the whole periphery (a plurality of inner coupling portions provided in the axial direction are numbered as one) is preferably between 10 and 80, and more preferably between 40 and 60, in the light of achieving the weight saving, the improvement of the power transmission, the improvement of the durability, while sufficiently supporting the load from the vehicle.

As to the shape of the individual inner coupling portion 4, there can be listed up a tabular shape, a columnar shape and the like, and these inner coupling portions 4 extend in a radial direction or a direction which is inclined from the radial direction, in a front view cross section. In the present invention, an extending direction of the inner coupling portion 4 is preferably within 25° in the radial direction, more preferably within ± 15° in the radial direction, and most preferably in the radial direction, in the front view cross section, in the light of improving the durability, as well as increasing a break point so as to cause a rigidity fluctuation hard to be generated.

The thickness of the inner coupling portion 4 is preferably between 4 and 12 % of the tire cross sectional height H1, and more preferably between 6 and 10 %, in the light of achieving the weight saving, the improvement of the durability, and the improvement of the lateral rigidity, while sufficiently transmitting the forces from the inner annular portion 1.

In a case where a single inner coupling portion 4 is provided in the axial direction, the width in the axial direction of the inner coupling portion 4 is appropriately decided in correspondence to the intended use or the like, however, in the case of assuming the substitution of a general pneumatic tire, it is preferably between 100 and 300 mm, and more preferably between 130 and 250 mm.

The tensile modulus of the inner coupling portion 4 is preferably between 5 MPa and 50 MPa and more preferably between 7 MPa and 20 MPa, in the light of achieving the weight saving, the improvement of the durability and the improvement of the lateral rigidity, while sufficiently transmitting the forces from the inner annular portion 1.

In the case of enhancing the tensile modulus of the inner coupling portion 4, the fiber reinforcing material obtained by reinforcing the elastic material by the fibers or the like is preferable.

The outer coupling portion 5 is structured such as to couple the outer annular portion 3 and the intermediate annular portion 2, and a plurality of outer coupling portions 5 are provided in such a manner as to be independent in the circumferential direction, by forming a suitable interval between both of them, or the like. It is preferable that the outer coupling portions 5 are provided so as to be spaced at fixed intervals in the light of improving the uniformity.
The outer coupling portion 5 and the inner coupling portion 4 may be provided at the same position of the whole periphery, or may be provided at different positions, however, it is preferable that the outer coupling portion 5 and the inner coupling portion 4 are provided at the same position of the whole periphery, in the light of improving the reinforcing effect by the intermediate annular portion 2.

The number of the outer coupling portions 5 at the time of being provided all over the whole periphery (a plurality of outer coupling portions provided in the axial direction are numbered as one) is preferably between 10 and 80, and more preferably between 40 and 60, in the light of achieving the weight saving, the improvement of the power transmission, the improvement of the durability, while sufficiently supporting the load from the vehicle.

As to the shape of the individual outer coupling portion 5, there can be listed up a tabular shape, a columnar shape and the like, and the outer coupling portion 5 extends in the radial direction or the direction which is inclined from the radial direction, in the front view cross section. In the present invention, an extending direction of the outer coupling portion 5 is preferably within 25° in the radial direction, more preferably within ± 15° in the radial direction, and most preferably in the radial direction, in the front view cross section in the light of improving the durability, as well as increasing the break point so as to cause the rigidity fluctuation hard to be generated,.

The thickness of the outer coupling portion 5 is preferably between 4 and 12 % of the tire cross sectional height H1, and more preferably between 6 and 10 %, in the light of achieving the weight saving, the improvement of the durability, and the improvement of the lateral rigidity, while sufficiently transmitting the forces from the inner annular portion 1.

In a case where a single outer coupling portion 5 is provided in the axial direction, the width in the axial direction of the outer coupling portion 5 is appropriately decided in correspondence to the intended use or the like, however, in the case of assuming the substitution of a general pneumatic tire, it is preferably between 100 and 300 mm, and more preferably between 130 and 250 mm.

The tensile modulus of the outer coupling portion 5 is preferably between 5 and 50 MPa and more preferably between 7 and 20 MPa, in the light of achieving the weight saving, the improvement of the durability and the improvement of the lateral rigidity, while sufficiently transmitting the forces from the inner annular portion 1.

In the case of enhancing the tensile modulus of the outer coupling portion 5, the fiber reinforcing material obtained by reinforcing the elastic material by the fibers or the like is preferable.

In the present embodiment, as shown in Fig. 3, there is shown an example in which the outer side of the outer annular portion 3 of the support structure body SS is provided with the reinforcing layer 6 reinforcing the bending deformation of the outer annular portion 3. As the reinforcing layer 6, a similar one to the belt layer of a conventional pneumatic tire can be provided.

The reinforcing layer 6 is constructed by a single layer or a plurality of layers, and can be formed, for example, by laminating a layer obtained by rubberizing a steel cord, an aramid cord, a rayon cord or the like which is arranged in parallel at an angle of inclination of about 20° with respect to the tire circumferential direction in such a manner that the steel cord or the like intersects in a reverse direction. Further, a layer constructed by various cords which are arranged in parallel in the tire circumferential direction may be provided in an upper layer of both the layers.

In the present embodiment, as shown in Fig. 3, there is shown an example in which a tread layer 7 is provided further outside the reinforcing layer 6, however, in the present invention, it is preferable that the tread layer 7 is provided in an outermost layer outside the outer annular portion 3 as mentioned above. As the tread layer 7, it is possible to provide a similar structure to the tread layer of the conventional pneumatic tire. Further, it is possible to provide a similar pattern to the conventional pneumatic tire, as the tread pattern.

For example, as a raw material of the tread rubber forming the tread layer 7, there can be listed up a natural rubber, a styrene butadiene rubber (SBR), a butadiene rubber (BR), an isoprene rubber (IR), a butyl rubber (IIR) and the like. These rubbers are reinforced by a filler such as carbon black, silica or the like, and is appropriately blended with a vulcanizing agent, a vulcanizing accelerator, a plasticizing material, an age resister or the like.

The non-pneumatic tire in accordance with the present invention can be manufactured by manufacturing the support structure body SS in accordance with a mold forming, an injection molding or the like, and thereafter forming the reinforcing layer 6, the tread layer 7 or the like as occasion demands. In a case where the reinforcing fibers are used as the reinforcing structure of the support structure body SS, the fiber reinforcing structure can be formed by previously arranging the reinforcing fibers within the mold.

A manufacturing method in accordance with the present invention is a manufacturing method which can preferably manufacture the non-pneumatic tire in accordance with the present invention as mentioned above, and is characterized by having a step of arranging the reinforcing fibers in a part of a space portion in a forming die, by using the forming die having the space portion corresponding to the support structure body, a step of filling a raw material liquid of an elastic material in the space portion of the forming die, and a step of solidifying the raw material liquid of the elastic material.

In accordance with these steps, it is possible to obtain the support structure body SS which is provided with the inner annular portion 1, the intermediate annular portion 2 provided concentrically at the outer side of the inner annular portion 1, the outer annular portion 3 provided concentrically at the outer side of the intermediate annular portion 2, a plurality of inner coupling portions 4 coupling the inner annular portion 1 and the intermediate annular portion 2, and a plurality of outer coupling portions 5 coupling the outer annular portion 3 and the intermediate annular portion 2, and is integrally formed by the elastic material, and in which at least the intermediate annular portion 2 is reinforced by the reinforcing fibers 2a. Preferably, it is possible to obtain the structure in which the outer annular portion 3, the outer coupling portion 5 and the inner coupling portion 4 are further reinforced by the reinforcing fibers.

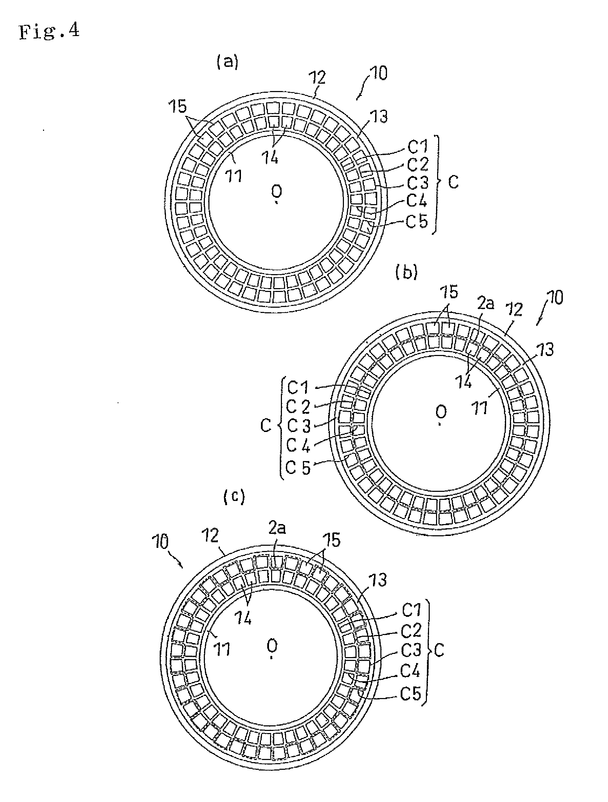

As the forming die, a forming die 10 having a space portion C corresponding to the support structure body SS is used, as shown in Fig. 4(a). The respective space portions C1 to C5 correspond to the inner annular portion 1, the intermediate annular portion 2, the outer annular portion 3, the inner coupling portion 4, and the outer coupling portion 5 of the support structure body SS. The space portion C is formed by an inner peripheral side die member 11, an outer peripheral side die member 12, a bottom surface die member 13, core die members 14 and 15, and a top surface die member (not shown).

In the forming die 10, the reinforcing fibers 2a are arranged in a part of the space portion C, as shown in Fig. 4(b). In an illustrated example, the continuous reinforcing fibers 2a are arranged in the space portion C2 corresponding to the intermediate annular portion 2. As to the reinforcing fibers 2a, it is preferable that the reinforcing fibers are constructed by a net-like fiber assembly constituted by fibers arranged in a tire axial direction and fibers arranged in a tire circumferential direction.

In the present invention, in the continuous reinforcing fibers 2a, it is possible to arrange the reinforcing fibers 2a via a plurality of space portions in the space portions C1 to C5, at the time of arranging the reinforcing fibers 2a in the space portion C.
For example, as shown in Fig. 4(c), it is possible to alternately pass the reinforcing fibers 2a through the space portion C2 corresponding to the intermediate annular portion 2 and the space portion C3 corresponding to the outer annular portion 3, while going through the space portion C5 corresponding to the outer coupling portion 5, at the time of arranging the reinforcing fibers 2a in the space portion C. Further, it is possible to arrange the reinforcing fibers 2a as shown in Fig. 4(c) in addition to the arrangement of the reinforcing fibers 2a shown in Fig. 4(b).

Next, the raw material liquid of the elastic material is filled into the space portion C of the forming die 10. As the raw material liquid of the elastic material, there can be listed up a raw material liquid obtained by softening the elastic materials mentioned above at a high temperature, a liquid state raw material before a reaction hardening or before a cross linking. At the time of filling, it is preferable that the viscosity of the raw material liquid is small at the time of filling for preferably achieving an intrusion into the gap of the space portion C or an impregnation into the reinforcing fibers.

Further, for the purpose of evenly filling the raw material liquid, a method of applying a centrifugal force is effective. In this case, it is possible to utilize a method of forming the bottom surface die member 13 of the forming die 10 as a disc shape and rotating the forming die 10 around an axis O by means of a motor or the like.

Next, the support structure body SS can be obtained by solidifying the raw material liquid of the elastic material, and removing from the die. As a method of solidifying the raw material liquid, there can be listed up a reaction hardening, a heat hardening, a cooling solidification and the like. In order to facilitate the die removal, it is effective to set the core die members 14 and 15 of the forming die 10 to a detachable mode.

After removing from the die, a post cure step may be executed. Further, it is possible to execute a step of trimming an end surface, a step of processing the outer peripheral surface of the outer coupling portion 5, a step of forming the reinforcing layer 6 and the tread layer 7, a vulcanizing step and the like.

Since the non-pneumatic tire in accordance with the present invention is excellent in the durability, and a rigidity fluctuation is hard to be generated by the positional relationship between the spoke position and the ground surface center position, the non-pneumatic tire can be substituted for a conventional pneumatic tire, and can be used as a substitution for a non-pneumatic tire such as a solid tire, a spring tire, a cushion tire or the like. As another specific intended use than a general pneumatic tire, for example, there can be listed up a tire for a wheel chair, a tire for a construction vehicle and the like.

### Other embodiments

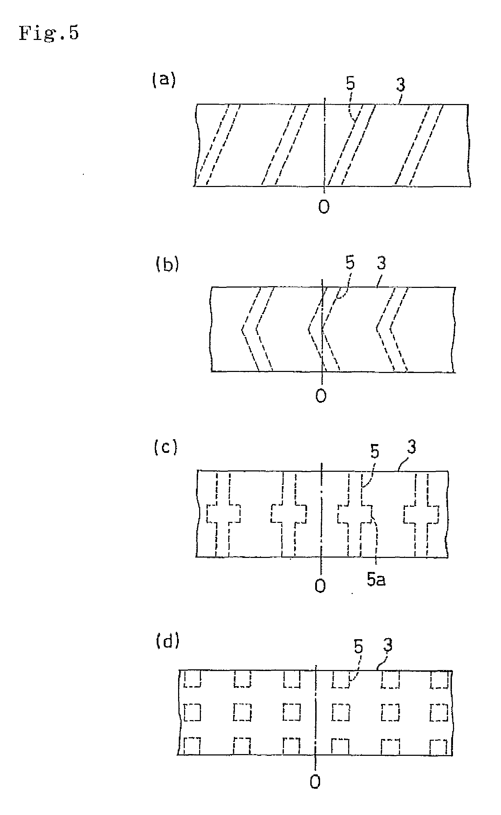

(1) In the embodiment mentioned above, there is shown an example in which the tabular inner coupling portion and outer coupling portion are arranged in parallel in the axial direction, however, as shown in Figs. 5(a) to 5(d), the shapes and the forming directions of the inner coupling portion and the outer coupling portion can employ various modes.

For example, as shown in Fig. 5(a), the arranging direction of the outer coupling portion 5 (same applies to the inner coupling portion) may be inclined from the direction of the axis O.

Further, as shown in Fig. 5(b), the outer coupling portion 5 (same applies to the inner coupling portion) may be formed in such a shape that a flat plate is bent.

Further, as shown in Fig. 5(c), the outer coupling portion 5 (same applies to the inner coupling portion) may be formed in such a shape that a flat plate has a rib 5a.

In this case, as shown in Fig. 5(d), a plurality of outer coupling portions 5 (same applies to the inner coupling portion) may be formed in the direction of the axis O.

(2) In the embodiment mentioned above, there is shown an example in which the tread layer is provided at the outer side of the outer annular portion via the reinforcing layer, however, in the present invention, the tread layer may be provided directly in the outer annular portion. Further, in some intended use, the tread layer may be omitted.

(3) In the embodiment mentioned above, there is shown an example in which only one intermediate annular portion is provided, however, in the present invention, a plurality of intermediate annular portions may be provided. Accordingly, the inner diameter of the inner annular portion may be made smaller.

(4) In the embodiment mentioned above, there is shown an example in which the inner diameter of the inner annular portion is made larger to some extent in such a manner as to be installable to the axle via a rim or the like, however, in the present invention, the inner diameter of the inner annular portion may be constructed to be small in conformity to the outer diameter of the axle or the like, in such a manner as to be directly installable to the axis.

(5) In the embodiment mentioned above, there is shown an example in which the forming die has a closed space portion, however, the annular portion may be set to a fixed width by using a forming die in which an upper surface is open to carry out the formation in the same manner and then applying a trimming process to the upper surface portion of the obtained support structure body.

(6) In the embodiment mentioned above, there is shown an example in which the reinforcing fibers are arranged as it is in the forming die, however, the reinforcing fibers may be previously formed as a tubular shape or a tabular shape for arranging it. It is possible to more evenly arrange a spirally wound cord or the like by previously forming.
Further, it is possible to improve an adhesive property between the reinforcing fibers and the base material and filling property of the elastic material by previously using the elastic material coming to the base material of the support structure body at the time of carrying out the previous forming, and impregnating and solidifying it into the reinforcing fibers.

### EXAMPLE

A description will be given below of an example or the like specifically showing the structure and the effect of the present invention. In this case, a measurement was carried out by setting evaluation items in the example and the like as follows.

### (1) Maximum ground pressure

A maximum ground pressure was obtained by averaging maximum ground pressures within the ground surfaces in a case where an outer end point of the outer spoke (or the spoke) exists on the ground center, and a case where the center position between the outer end point of the adjacent outer coupling portions (or spokes) exists on the ground center, at the time of applying a vertical load 2000 N, and is indicated by an index number at the time of setting a Comparative Example 1 to 100. The smaller value is more excellent.

### (2) Maximum ground pressure difference

A maximum ground pressure is a difference between the maximum ground pressures within the ground surfaces in a case where an outer end point of the outer spoke (or the spoke) exists on the ground center, and a case where the center position between the outer end point of the adjacent outer coupling portions (or spokes) exists on the ground center, at the time of applying a vertical load 2000 N, and is indicated by an index number at the time of setting a Comparative Example 1 to 100. The smaller value is more excellent.

### (3) Vertical rigidity value

A maximum ground pressure is an average value of values obtained by dividing the load by respective deflecting amounts in a case where an outer end point of the outer spoke (or the spoke) exists on the ground center, and a case where the center position between the outer end point of the adjacent outer coupling portions (or spokes) exists on the ground center, at the time of applying a vertical load 2000 N, and is indicated by an index number at the time of setting a Comparative Example 1 to 100. If this value is large, the vertical rigidity is high. In this case, the deflecting amount is measured on the basis of the displacement of the tire axis.

### (4) Vertical rigidity difference

A maximum ground pressure is a difference between the respective vertical rigidity values in a case where an outer end point of the outer spoke (or the spoke) exists on the ground center, and a case where the center position between the outer end point of the adjacent outer coupling portions (or spokes) exists on the ground center, at the time of applying a vertical load 2000 N, and is indicated by an index number at the time of setting a Comparative Example 1 to 100. The smaller this value is, the more excellent non-uniformity of the rigidity is.

### (5) Durability

A traveling distance until the spoke breaks down was measured by carrying out a drum test under a condition of speed 40 km/h and vertical load 2000 N. The results are shown by an index number at the time of setting a Comparative Example 1 to 100. The larger the value is, the more excellent the durability is.

### (6) Rigidity fluctuation test

A state of a change of rigidity was tested by measuring a change of deflecting amount at the time of increasing an applied vertical load little by little. At the time of the test, a measurement was carried out in both of a case where the outer end point of the outer spoke (or the spoke) exists on the ground center, and a case where the center position between the outer end point of the adjacent outer coupling portions (or spokes) exists on the ground center, and it was searched how the difference of the vertical rigidities of both of the cases (the rigidity fluctuation) changes.

### Comparative Example 1 (Conventional Product)

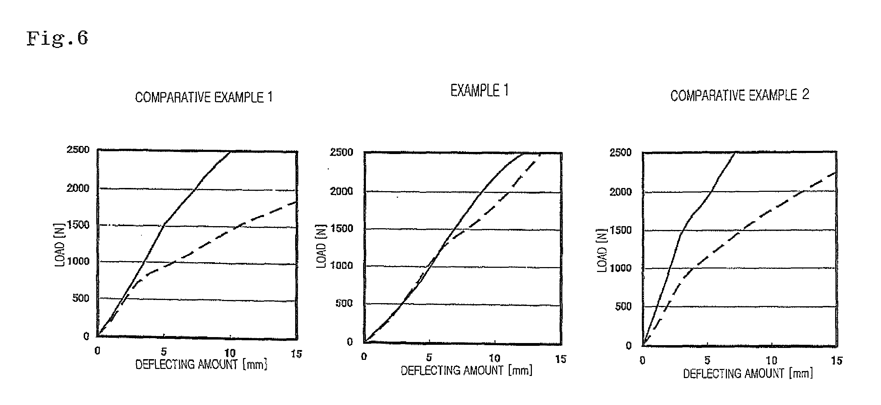

There was produced a non-pneumatic tire which is provided with a support structure body having an inner ring, an outer ring and a spoke (standing erect in a radial direction) coupling the both, two layers of reinforcing layers provided in an outer periphery thereof, and a tread rubber, in accordance with dimensions, physical properties and the like as shown in Table 1, and the performances mentioned above were evaluated. The results are shown in Table 1 in conjunction therewith. Further, the results of the rigidity fluctuation test are shown in Fig. 6.

In this case, in all the Examples and the Comparative Examples, the widths in the axial direction were set to 140 mm, in all the rings and spokes. Further, the formation of the support structure body was executed by using a metal die having a space portion corresponding to the support structure body, and filling a raw material liquid (isocyanate end pre-polymer: Sofrannate manufactured by Toyo Tire & Rubber Co., Ltd., setting agent: MOCA manufactured by Ihara Chemical Industry Co., Ltd.) of an elastic material (a polyurethane resin) in the space portion by using an urethane casting machine, and solidifying the resultant.

### Comparative Example 2

In the same manner as the Comparative Example 1, there was produced a non-pneumatic tire which is provided with a support structure body having an inner ring, an outer ring and a spoke (standing erect in a radial direction) coupling the both, three layers of reinforcing layers provided in an outer periphery thereof, and a tread rubber, in accordance with dimensions, physical properties and the like as shown in Table 1, and the performances mentioned above were evaluated. The results are shown in Table 1 in conjunction therewith. Further, the results of the rigidity fluctuation test are shown in Fig. 6.

### Example 1

There was produced a non-pneumatic tire which is provided with a support structure body having an inner ring, an intermediate ring, an outer ring, inner spokes (standing erect in a radial direction) and outer spokes (standing erect in a radial direction) coupling the respective rings, two layers of reinforcing layers provided in an outer periphery thereof, and a tread rubber, in accordance with dimensions, physical properties and the like as shown in Table 1, and the performances mentioned above were evaluated. The results are shown in Table 1 in conjunction therewith. Further, the results of the rigidity fluctuation test are shown in Fig. 6.

In this case, the formation of the support structure body was executed by using a metal die having a space portion corresponding to the support structure body, arranging a net-shaped glass fiber reinforcing material as shown in Table 1 in a portion corresponding to the intermediate ring in the space portion, thereafter filling a raw material liquid (isocyanate end pre-polymer: Sofrannate manufactured by Toyo Tire & Rubber Co., Ltd., setting agent: MOCA manufactured by Ihara Chemical Industry Co., Ltd.) of an elastic material (a polyurethane resin) in a whole of the space portion of the metal die by using an urethane casting machine, and solidifying the resultant.

### Example 2

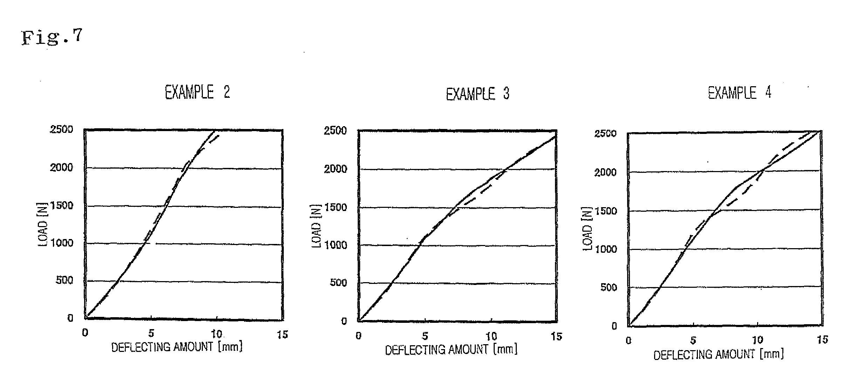

In the same manner as the Example 1, there was produced a non-pneumatic tire which is provided with a support structure body having an inner ring, an intermediate ring (constructed as a reinforcing structure by a plain weave fabric of glass fibers), an outer ring, inner spokes (standing erect in a radial direction) and outer spokes (standing erect in a radial direction) coupling the respective rings, three layers of reinforcing layers provided in an outer periphery thereof, and a tread rubber, in accordance with dimensions, physical properties and the like as shown in Table 1, and the performances mentioned above were evaluated. The results are shown in Table 1 in conjunction therewith. Further, the results of the rigidity fluctuation test are shown in Fig. 7.

### Examples 3 and 4

There was produced a non-pneumatic tire having the same structure as the Example 2 except that the inner diameter of the intermediate ring was changed to the dimension shown in Table 1, in the Example 2, and the performances mentioned above were evaluated. The results are shown in Table 1 in conjunction therewith. Further, the results of the rigidity fluctuation test are shown in Fig. 7.

**Table 1**

| | Data and physical properties | Example | | | | Comparative Examples | | |
|---|---|---|---|---|---|---|---|---|
| | | 1 | 2 | 3 | 4 | 1 | 2 | 3 |
| inner ring | inner diameter [mm] | 177.4 | 177.4 | 177.4 | 177.4 | 177.4 | 177.4 | 177.4 |
| | thickness [mm] | 3 | 3 | 3 | 3 | 3 | 3 | 3 |
| | tensile modulus [MPa] | 8 | 7 | 7 | 7 | 15 | 15 | 7 |
| inner spoke | thickness [mm] | 6 | 6 | 6 | 6 | - | - | 6 |
| | tensile modulus [MPa] | 8 | 7 | 7 | 7 | - | - | 7 |
| intermediate ring | inner diameter [mm] | 212.9 | 212.9 | 200.9 | 224.9 | - | - | 212.9 |
| | thickness [mm] | 4 | 4 | 4 | 4 | - | - | 4 |
| | tensile modulus [MPa] | 8 | 7 | 7 | 7 | - | - | 7 |
| internal ring reinforcement | cord cross sectional area [mm2] | 2.1 | 2.1 | 2.1 | 2.1 | - | - | 2.1 |
| | circumferential direction cord striking number [number/25.4 mm] | 3 | 3 | 3 | 3 | - | - | 3 |
| | cord angle [deg] | 0 | 0 | 0 | 0 | - | - | 0 |
| | width direction cord striking number [number/25.4 mm] | 3 | 3 | 3 | 3 | - | - | 3 |
| | cord angle [deg] | 90 | 90 | 90 | 90 | - | - | 90 |
| | cord tensile modulus [MPa] | 10980 | 10980 | 10980 | 10980 | - | - | 10980 |
| outer spoke | thickness [mm] | 6 | 6 | 6 | 6 | - | - | 6 |
| | tensile modulus [MPa] | 8 | 7 | 7 | 7 | - | - | 7 |
| spoke | thickness [mm] | - | - | - | - | 6 | 6 | - |
| | tensile modulus [MPa] | - | - | - | - | 15 | 15 | - |
| outer ring | inner diameter [mm] | 249.4 | 249.4 | 249.4 | 249.4 | 249.4 | 249.4 | 249.4 |
| | thickness [mm] | 2 | 2 | 2 | 2 | 2 | 2 | 2 |
| | tensile modulus [MPa] | 8 | 7 | 7 | 7 | 15 | 15 | 7 |
| reinforcing layer 1 | cord line diameter [mm] | 0.25 | 0.25 | 0.25 | 0.25 | 0.25 | 0.25 | 0.25 |
| | cord striking number [mumber/25.4 mm] | 23 | 23 | 23 | 23 | 23 | 23 | 23 |
| | cord tensile modulus [MPa] | 180000 | 180000 | 180000 | 180000 | 180000 | 180000 | 180000 |
| | cord angle [deg] | 20 | 20 | 20 | 20 | 20 | 20 | 20 |
| reinforcing layer 2 | cord line diameter [mm] | 0.25 | 0.25 | 0.25 | 0.25 | 0.25 | 0.25 | 0.25 |
| | cord striking number [number/25.4 mm] | 23 | 23 | 23 | 23 | 23 | 23 | 23 |
| | cord tensile modulus [MPa] | 180000 | 180000 | 180000 | 180000 | 180000 | 180000 | 180000 |
| | cord angle [deg] | -20 | -20 | -20 | -20 | -20 | -20 | -20 |
| reinforcing layer 3 | cord line diameter [mm] | - | 0.25 | 0.25 | 0.25 | - | 0.25 | 0.25 |
| | cord striking number [number/25.4 mm] | - | 23 | 23 | 23 | - | 23 | 23 |
| | cord tensile modulus [MPa] | - | 180000 | 180000 | 180000 | - | 180000 | 180000 |
| | cord angle [deg] | - | 20 | 20 | 20 | - | 20 | 20 |
| tread rubber | thickness [mm] | 10.2 | 8 | 8 | 8 | 10.2 | 8 | 8 |
| | tensile modulus [MPa] | 2.6 | 2.6 | 2.6 | 2.6 | 2.6 | 2.6 | 2.6 |
| maximum ground pressure | index number (smaller is more excellent) | 85 | 99 | 82 | 73 | 100 | 97 | 160 |
| maximum ground pressure difference | index number (smaller is more excellent) | 43 | 4 | 1 | 13 | 100 | 51 | 19 |
| vertical rigidity value | index number (the larger it is, the higher the rigidity is) | 102 | 134 | 92 | 98 | 100 | 139 | 181 |
| vertical rigidity difference | index number (smaller is more excellent) | 22 | 5 | 1 | 3 | 100 | 139 | 11 |
| durability | index number (larger is more excellent) | 277 | 288 | 178 | 186 | 100 | 105 | 115 |

As shown in Figs. 6 and 7 and the results of Table 1, in the non-pneumatic tires in accordance with the examples 1 to 4, the rigidity fluctuation in accordance with the positional relationship between the spoke position and the ground surface center position is small, and the durability is excellent, in comparison with the conventional product. In particular, in the examples 2 to 4 in which the intermediate annular portion is reinforced by the reinforcing fibers, the rigidity fluctuation is hardly generated by the positional relationship to the region in which the vertical load is large.

In this case, the break point is low as shown in Fig. 6, in the non-pneumatic tires in accordance with the comparative examples 1 and 2, and it is known that this affects greatly an increase of the rigidity fluctuation.

### Comparative Example 3

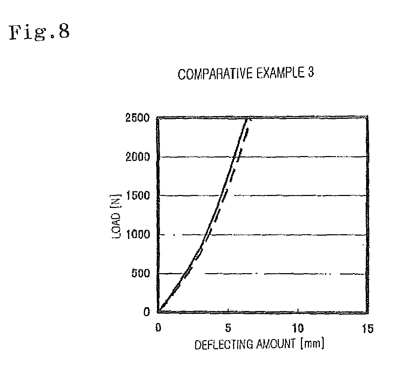

There was produced a non-pneumatic tire having the same structure as the Example 2 except that a tabular connecting portion (having a tensile modulus 7 MPa) overstriding the outer ring via the intermediate ring from the inner ring while passing through the center of the inner spoke and the center of the outer spoke was provided with a thickness 10 mm in the center of the tire width, and the performances mentioned above were evaluated. The results are shown in Table 1 in conjunction therewith. Further, the results of the rigidity fluctuation test are shown in Fig. 8. As a result, it was found that the values of the maximum ground pressure and the vertical rigidity become very large in an index number ratio, and the deflecting amount demanded in the tire can not be achieved.

## Claims

1. A non-pneumatic tire having a support structure body supporting a load from a vehicle,
wherein the support structure body comprises:
- an inner annular portion;
- an intermediate annular portion provided concentrically at an outer side of the inner annular portion;
- an outer annular portion provided concentrically at an outer side of the intermediate annular portion;
- a plurality of inner coupling portions coupling the inner annular portion and the intermediate annular portion and being independent in a circumferential direction; and
- a plurality of outer coupling portions coupling the outer annular portion and the intermediate annular portion and being independent in a circumferential direction.

2. The non-pneumatic tire as claimed in claim 1,
wherein the intermediate annular portion is reinforced by reinforcing fibers.

3. The non-pneumatic tire as claimed in claim 1,
wherein the support structure body is integrally formed by an elastic material.

4. The non-pneumatic tire as claimed in claim 1,
wherein the support structure body is structured such that the outer annular portion, the outer coupling portions, the inner coupling portions and the inner annular portion are further reinforced by reinforcing fibers.

5. The non-pneumatic tire as claimed in claim 2,
wherein the reinforcing fibers are constructed by a net-like fiber assembly constituted by fibers arranged in a tire axial direction and fibers arranged in a tire circumferential direction.

6. The non-pneumatic tire as claimed in claim 1,
wherein a reinforcing layer reinforcing a bending deformation of the outer annular portion is provided in an outer side of the outer annular portion.

7. The non-pneumatic tire as claimed in claim 1,
wherein a tread layer is provided in an outermost layer in an outer side of the outer annular portion.

8. A manufacturing method of a non-pneumatic tire as claimed in claim 2, the manufacturing method comprising:
- a step of arranging the reinforcing fibers in a part of a space portion corresponding to the support structure body, by using a forming die having the space portion;
- a step of filling a raw material liquid of an elastic material in the space portion of the forming die; and
- a step of solidifying the raw material liquid of the elastic material.

9. The manufacturing method of a non-pneumatic tire as claimed in claim 8,
wherein the reinforcing fibers are alternately passed through the space portion corresponding to the intermediate annular portion and the space portion corresponding to the outer annular portion, while going through the space portion corresponding to the outer coupling portion, at the time of arranging the reinforcing fibers in the space portion.
